(19)

**Europäisches Patentamt**

**European Patent Office**

**Office européen des brevets**

(11) **EP 2 551 669 A1**

(12) **EUROPEAN PATENT APPLICATION**

(43) Date of publication:
**30.01.2013 Bulletin 2013/05**

(51) Int Cl.:
***G01N 33/00*** (2006.01)    ***G01N 33/02*** (2006.01)
***H04N 21/40*** (2011.01)

(21) Application number: **11176032.8**

(22) Date of filing: **29.07.2011**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Nestec S.A.**
**1800 Vevey (CH)**

(72) Inventors:
• **Nicod, Ludivine**
**CH 1800 Vevey (CH)**

• **Rudy, Anne-Priscille**
**FR 14320 Feuguerolles-Bully (CH)**

(74) Representative: **Gundel, Isabelle**
**Avenue Nestlé 55**
**1800 Vevey (CH)**

Remarks:
A request for correction of figure 3 has been filed pursuant to Rule 139 EPC. A decision on the request will be taken during the proceedings before the Examining Division (Guidelines for Examination in the EPO, A-V, 3.).

(54) **System and method for tailoring food or beverage products to consumer requirements**

(57)    The invention provides a a method for tailoring food and/or beverage products to consumer requirements, comprising the steps of providing to a target person a set of a plurality of different food product samples of the same food product category, each product sample having at least two organoleptic properties, and the food product samples differing from each other with regard to at least one organoleptic property, wherein each organoleptic property is present, preferably in differing strengths, in at least two food product samples, receiving liking values representing a liking for the consumed product samples from the target person, via a first communication interface designed for electronic communication, and computing a target person-specific prioritization ranking as to the organoleptic properties by a computing system, functionally connected to the first communication interface preferably via a network and designed for computing the prioritization ranking, the prioritization ranking being compiled by computing, for each of the organoleptic properties, a liking score for the corresponding organoleptic property, the liking score having contributions from liking values of at least two different food product samples consumed by the same target person.

EP 2 551 669 A1

**Description**

The present invention generally is in the field of giving a consumer the technical means for giving a consumer's feedback on taste on flavor notes of food products to be offered to the consumer.

For high quality and therefore expensive beverage and food products, in order to obtain a high consumer satisfaction, it is desired to provide to a consumer products that meet the consumers' taste or expectations.

This is especially true if the product is bought by a customer for another person, in the following referred to as a "target person", e.g. as a present, while being uncertain which exact product suits the taste preferences of the target person best. Taste in this sense is to be understood as the aromatic taste, aroma, or flavor of a product.

The invention hence aims at providing a solution to this problem and more specifically at determining what product suits the taste of a target person with a high probability.

Brief description of the invention

The above object is achieved by a method for tailoring food and/or beverage products to consumer requirements according to claim 1.

According to the inventions, this method comprises the steps of

- providing a target person with a set of a plurality of different food product samples of the same food product category, each product sample having at least two predefined organoleptic properties and the food product samples differing from each other with regard to at least one organoleptic property, wherein each organoleptic property is present, preferably in differing strengths, in at least two food product samples,
- receiving liking values representing a liking for the consumed product samples from the target person, via a first communication interface designed for electronic communication, and
- computing a target person-specific prioritization ranking as to the organoleptic properties by a computing system, communicating with the first communication interface, preferably via a wireless or wirebound network, and designed for computing the prioritization ranking, the prioritization ranking being compiled by computing, for each of the organoleptic properties, a liking score for the corresponding organoleptic property, the liking score having contributions from liking values of at least two different food product samples consumed by the same target person.

"Predefined organoleptic properties" is to be understood that any food product will have a plurality of different organoleptic properties, however, for the purpose of the invention at least two are selected and thus pre-defined.

The data obtained can be used for various purposes, e.g. for consumer research, although the main purpose of the present invention is to enable a manufacturer or seller, or a person who wants to make a gift, to provide the target consumer with a product matching his or her taste preferences.

Thus, according to preferred embodiment of the invention, the method further comprises the step of sending at least one product to the target person, said product being selected based on the computed prioritization ranking.

Preferably, the product is selected from a group of available products, a number of key organoleptic properties being associated to each product, and wherein the product is selected if the key organoleptic properties match the organoleptic properties having the highest ranking.

According to a preferred embodiment of the invention, the plurality of different food product samples is sent to the target person in response to a request by a customer using a second interface being designed for the customer.

It should be noted that the customer and the target person can also be identical, i.e. a consumer can request samples to be sent to him/herself.

According to a further preferred embodiment of the invention, the customer in the request identifies a product type and/or product group from which the product to be sent to the target person should be selected. If the food products are chocolate items, the customer may for example pre-select one of various product groups such as filled chocolates, plain chocolates, or chocolate tablets. Preferably, the second interface is a communication interface, and the request is received by a manufacturer or seller electronically. The interface can for example be a website, or an application running on a mobile device, allowing it to transmit the request from a customer to a manufacturer or seller in a simple and convenient manner, and in a form which can then be treated further by the manufacturer or seller without any need for data conversion or manual entering of data. The first and second communication interface may be part of one website provided by a manufacturer and seller.

According to a further preferred embodiment of the invention, the customer submits via the second interface with the request another parameter of the product to be sent to the target person, wherein the parameter is at least one of weight, price category, number of items, volume, and size, and/or wherein the customer submits additional information, the information being at least one of address information, payment/billing information, messages accompanying the product and/or the sample.

Preferable the sample set provided to the target person comprises samples representing differing expressions of a specific type of food product which has been chosen by the customer. For example, if the customer has entered in the request that filled chocolates should be sent to the target person, the target person may receive a sample set representing differing expressions of filled chocolates. For determination of the target person's preference, also plain chocolates can be included. The samples should, however, be of the same food product category (e.g. chocolate products).

Preferably, the organoleptic property or organoleptic property combination of the samples are determined in a sensory profiling. The sensory profiling herein, as known to the skilled person, is a process in which the at least one organoleptic property of a sample and/or product is quantified objectively by a panel of trained professionals (e.g. in degustation process).

According to a preferred embodiment of the invention, the at least one organoleptic property is assigned a sensory score, and/or each organoleptic property of the sample is assigned a sensory score.

The step of receiving liking values for the consumed product samples comprises preferably a step wherein the target person rates the samples according to a rating schema provided via the first communication interface. The rating schema can for example be provided in the form of an online questionnaire.

Preferably, the step of receiving liking values for the consumed product samples comprises a step wherein the target person assigns a liking value to at least one sample, preferably to each sample, and transmits it using the first communication interface. For the target person it is easy to understand the concept of an liking value, and it can thus be assured that useful liking values are received.

According to a preferred embodiment of the invention, based on the liking value for each sample and the sensory score for each organoleptic property of each sample, the liking score is computed as a normalized consumer liking (NCL), and the organoleptic properties are ranked according to the normalized consumer liking in the target person-specific prioritization ranking.

The normalization compensates the fact that in certain food products, such as e.g. chocolate, certain organoleptic properties (e.g. cocoa flavor) will have a higher sensory score leading to a higher computed average liking score (throughout all consumers). The normalization takes this into account and leads to a normalized value indicating the liking score of a specific target person relative to the average liking score for this organoleptic property.

Preferably, the samples are specifically produced to show at least one organoleptic property more significantly than another organoleptic property. For example, when the food products are chocolates, there can be samples having a stronger cocoa flavor, while other samples may have a stronger milky or nutty taste.

According to a preferred embodiment of the invention, the target person-specific prioritization rankings computed for a plurality of target persons are used to specifically produce products matching consumer preferences. It is always an aim of manufacturers of food products to offer products that match the taste preferences of a large number of consumers, and the feedback received from different target persons can thus not only be used to offer a specific product matching a certain target person's taste preferences to this specific target person, but it can also be used to guide the development and design of new products that match the taste preferences of many consumers.

As already mentioned above, the first and/or the second

communication interface can be a website or an application executed on a stationary or mobile communication terminal. The first and second communication interface can either be part of the same website or application, or they can be separate.

In a further aspect, the invention provides a system, comprising:

- a set of a plurality of different food product samples of the same food product category, each product sample having at least two predefined organoleptic properties and the food product samples differing from each other with regard to at least one organoleptic property,
  wherein each organoleptic property is present, preferably in differing strengths, in at least two food product samples,
- a first communication interface being designed to electronically receive liking values representing a liking as to the consumed product samples from a target person,
- a computing system, functionally connected to the first communication interface preferably via a network and designed for computing a target person-specific prioritization ranking as to the organoleptic properties, the prioritization ranking being compiled by computing, for each of the organoleptic properties, a liking score for the corresponding organoleptic property, the liking score having contributions from liking values of at least two different food product samples consumed by the same target person.

The system can be configured to execute any one of the method steps of the above method.

The solution provided by the invention is subject to the independent claims. Further aspects of the invention are claimed by the dependent claims.

Brief description of the drawings

Further aspects of the invention are now described with reference to the figures:

Fig. 1    exemplarily shows sensory scores for samples of a sample set.

Fig. 2    exemplarily shows sensory scores, max score in the range and percent of the max values for a product.

Fig. 3    shows a formula for NCL calculation.

Fig. 4    shows examples for products with key attributes.

Fig. 5    illustrates one embodiment of the inventive method.

Fig. 6    is another illustration of the inventive process.

Detailed description of the invention

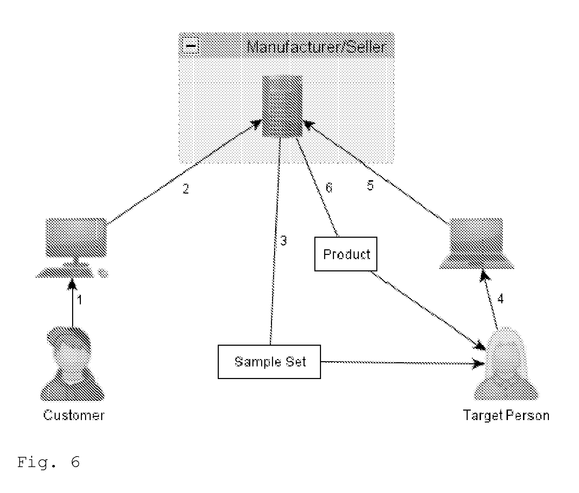

With reference to Fig. 6, a system according to the present invention will now be explained. The system presents the following components:

- an electronic communication interface, located at a target person's site, preferably adapted to displaying digital media,
- a computing unit, located at a food product manufacturer's site and in data communication with the communication interface, e.g. via a network such as e.g. the Internet, and
- a set of (physical) food product samples of the same food category (e.g. "ice cream", "chocolate",...).

The system can further present a communication interface located on the customer's site and a food product presentation.
The electronic communication interface especially can communicate digitally in a digital medium and is adapted to convey information being encoded at least partially in digital form.
In the following these components will be explained in detail.

Set of food product samples:

The set of food product samples includes samples representing differing expressions, e.g. of the same product. Each product sample differs from another sample with regard to at least one organoleptic property. Among the samples, each organoleptic property can be present, preferably in differing strengths, in at least two food product samples. Each sample can have a number of organoleptic properties, from which a subset can be selected as "predefined" organoleptic properties. These predefined organoleptic properties then represent the organoleptic properties relevant for the further process. In the following the organoleptic properties refer to the predefined organoleptic properties. Normally, a sample has at least two organoleptic properties.
The food product samples are typically presented to the target person in a packaging of one or more packaging units. Depending on the product samples they are packaged in a way such that a sample cannot influence the organoleptic properties of another sample, e.g. its smell taste or flavor. Therefore the samples can be packed separately.
The sample set and even the single samples can also be provided with an identifier allowing identifying each sample set or sample.

Food product category:

A food product category is a category including similar food products. E.g. a food product category could be "chocolate products" including plain and filled chocolates, pralines, assortments of chocolates, but e.g. not tea or coffee products. A food product category can also be specified by other means such as taste, texture, firmness, softness, smell, etc.

Electronic Communication interface: An electronic communication interface is designed to display information and to receive a user's input, which will then be communicated electronically.

The electronic communication interface can be a web interface, such as a form on a website that is able to accept liking values by the target person. This interface may belong to an electronic profile of the target person, which can be created for the target person by the manufacturer/seller after the target person registers with the manufacturer/seller, e.g. on the manufacturer's website. The electronic profile for the target person could also be created by the manufacturer in advance using information obtained from the customer. The electronic profile can also be hosted by a third party, e.g. Facebook, GooglePlus, LinkedIn, Xing, or other (social) networks.

The communication interface can of course also be an application (an "app") running on a stationary and/or mobile communications terminal, such as e.g. a smartphone. The target person then enters the liking values using the application and this information is then transmitted to the manufacturer (or seller) electronically using wired and/or wireless networks, e.g. telephone lines, WiFi/WLAN, 3G networks.

The application might also accept a sample set or sample identifier. If the application e.g. is provided with data for sample sets or samples, e.g. sensory scores, the application is able to calculate liking scores from the rating by the target person, e.g. by the received liking values, and the provided data indicative of the organoleptic properties most relevant to the target person. The terminal can for example a PC, telephone, smart phone (iPhone, Android phone, WebOS phone, BlackBerry, ...), and/or a tablet (iPad, Android tablet, WebOS tablet, BlackBerry Playbook, ...).

A communication interface can also be used by the customer to submit to the manufacturer/seller a request to send a food product (sample set) to the target person. The product can be of a product type or category defined by the customer using the communication interface. The communication interface can also accept additional information from the customer, e.g. messages to be sent with the sample set and/or the food product.

The interface and respective terminal can also be provided in a shop affiliated with the manufacturer or seller.

Computing system:

The computing system relates to a system for performing the computing or calculation operations. This system may be specially constructed for the required purposes, or it may comprise at least a general-purpose computer selectively activated or reconfigured by a computer program stored in the computer.

Such a computer program may be stored in a computer readable storage medium, such as, but is not limited to, any type of disk including floppy disks, optical disks, CD-ROMs, magnetic-optical disks, read-only memories (ROMs), random access memories (RAMs), EPROMs, EEPROMs, magnetic or optical cards, application specific integrated circuits (ASICs), or any type of media suitable for storing electronic instructions, and each coupled to a computer system bus. Furthermore, the computer referred to may include a single processor or may be architectures employing multiple processor designs for increased computing capability.

The computing system can also comprise a network of computers and may be configured to influence the manufacturer's production and/or the logistics system also of a seller.

In the present invention, the computing system can accept information entered by target person and/or the customer. For this, the computing system can provide the communication interface, e.g. a website, and uses the information entered through the communication interface to control the inventive method.

E.g. the computing system may decide, based on a product selected by the customer, that a and/or what sample set needs to be sent to the target person.

The computing system may also decide what product should be sent to the target person upon reception of the liking values and/or may present the target person with a selection of suitable products. For this, the communication interface can be used.

By influencing the manufacturer's production and/or the logistics system also of a seller, the computing system may trigger or initiate the process required to actually send the product to the target person.

The computing system is hence functionally connected to the communication interface preferably via a network and designed for computing a target person-specific prioritization ranking as to organoleptic properties. The prioritization ranking is compiled by computing for each of the organoleptic properties, a liking score for the corresponding organoleptic property, the liking score having contributions from the target person's rating of at least two different food product samples.

In case an application is used by the target person, the computing system can be configured to receive (partial) computation results and determine the product or selection of products based on the computation results. The (partial) computation results can then be provided by the terminal the application is executed on.

The computing system can also inform the customer on the food product that was finally sent to the target person, e.g. by an electronic message or an update of a profile of the customer, which may also be maintained by the manufacturer.

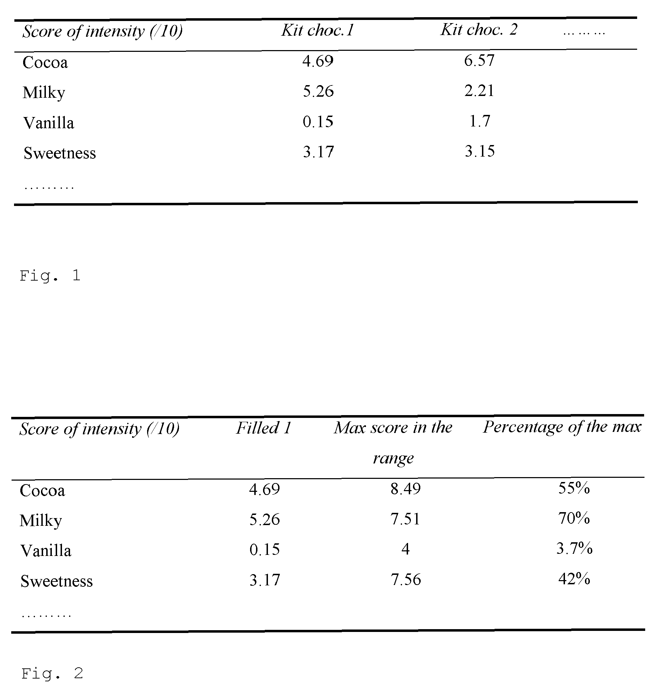

Now, with reference to Figs. 1 to 5 and further to 6 the method according to the present invention will be explained.

In case a customer wants to purchase a food product, e.g. chocolate, tea, coffee, ice-cream, bonbons, etc. for himself or another person, the target person, an option is provided for the customer to allow him or the target person to find out which product of a range of products most probably suits the target persons taste (of course, whenever the target person is referred to herein, it can either be the customer himself / herself or another person for who the product is intended and/or arrives at in the end).

Firstly, the customer approaches the manufacturer or seller of a product to buy the product or a product belonging to a category of products. For example, the customer uses communication interface, e.g. an (online) shop of the manufacturer or seller. The customer then selects a product type from a range of products, e.g. pralines, chocolate, etc. for the target person, while not selecting a specific product, e.g. vanilla flavored chocolate.

The target person is then provided with a plurality of product samples, e.g. a kit of samples. Each of the samples is produced in a way to provide at least one predefined organoleptic property, e.g., taste, flavor, consistency (e.g. creaminess, crunchiness, etc.), etc., especially when being consumed.

The samples provided can be previously determined by the computing system of the manufacturer. In this regard, the specific organoleptic property or organoleptic properties can be enhanced in the sample, so that the sample is distinguishable from the other samples in taste, smell, haptic or visual appearance. It is also possible that one organoleptic property dominates in one sample. "Enhanced" in this sense means that an organoleptic property is stronger or more present in a sample in comparison to another organoleptic property.

Before being sent to the target person, the samples are profiled and the organoleptic property or number of organoleptic properties and their specifics are known to the manufacturer or seller. For the inventive method, the organoleptic properties of each sample are determined by a sensory profiling and for every organoleptic property the intensity of this organoleptic property in the sample, e.g. the intensity of a flavor, is determined by a sensory profiling. As a result, each organoleptic property for each sample can be represented as a score obtained.

In a next step, the target person tastes the samples and rates the samples from the sample set. For example, for each sample a scale can be provided on which the target person has to rate the taste or other sensory expression of the samples by deciding on a liking value. For example, the scale can range from 1 to 7 where 7 stands for "excellent" and 1 stands for "dislike very much" or vice versa. By rating the samples, the target person is not rating a single organoleptic property but indicates a liking value, i.e. the target person's overall impression of the food product sample (e.g. based on the sample's taste, flavor, texture, firmness, softness, etc.).

In addition or alternatively to the liking values for the overall impression of the food product values, the target person can be invited by the first interface, to submit liking values for certain aspects of a the food product sample which are influenced by a group of organoleptic properties b, such as e.g. liking values for "overall taste", "overall texture", etc..

It should be noted that the target person is not asked by the software to submit liking values as to the organoleptic properties themselves (e.g. "I like a strong cocoa flavor, I dislike a nutty flavor"), nor to rate organoleptic properties (e.g. "this sample tastes very nutty, this sample tastes rather milky").

For each sample also a number of key organoleptic properties can be defined that sufficiently distinguish the sample from other samples. Then the samples can be identified only by these key organoleptic properties.

Therefore, when the target person rates the samples using the communication interface from/on the target person's communication terminal, a liking score of the target person for (an) organoleptic property(s) of the samples can be calculated or computed by the computing system (and/or at least partially by an application used by the target person) based on the sensory scores for each organoleptic property resulting from the sensory profiling and the liking values by the target person. The rating process can be supported by a manual provided to the target person explaining how the samples should be evaluated.

The rating by the target person tells how much the target person likes a sample. This also indicates implicitly how much the target person likes the (key) organoleptic properties of the sample, as these organoleptic properties define the perception by the target person. The calculated liking score hence represents how much the target person likes specific organoleptic properties of the samples.

From the calculated liking score for each organoleptic property over all samples a Normalized Consumer Liking NCL can be calculated for each organoleptic property contained in the sample set.

The Normalized Consumer Liking is to be understood as a consumer-specific prioritization ranking of the organoleptic properties. The prioritization ranking is compiled by computing, e.g. using the computing unit, for each of the organoleptic properties the Normalized Consumer Liking value for the corresponding organoleptic property. The Normalized Consumer Liking value comprises contributions from the target person's rating of at least two different food product samples.

When the target person rated all samples in the sample set, for each organoleptic property in the sample set the Normalized Consumer Liking can be calculated by either the computing system and/or the application on the terminal of the target person, and in turn the preferences for the organoleptic properties contained in the sample set can be ranked. This ranking then shows which organoleptic property/organoleptic properties is/are most important to the target person as the target person rated the different samples and the different samples are differentiated regarding the organoleptic properties.

Hence, for example, after the target person tasted and rated all samples, samples with specific flavors or flavor combinations which were rated highest indicate that the target person likes these flavors the most. These flavors will range high in the ranking according to the Normalized Consumer Liking.

It can hence be determined by the computing system from this computation that some (key) organoleptic properties are more important to the target person than the other organoleptic properties and based on these organoleptic properties a suitable product/suitable products can be selected from a range of products available by a manufacturer or seller.

The computing system can also identify the suitable product(s) automatically based on the prioritization ranking being compiled by computing, for each of the e.g. organoleptic properties. It is also possible that based on these ranked/preferred organoleptic properties specific products tailored for the target person are produced.

It is also possible to only use a specific number of the calculated Normalized Consumer Likings, that is the Normalized Consumer Likings for a specific number of organoleptic properties, and to select products only fitting these (key) organoleptic properties for the target person.

The target person can submit the liking values of the samples to the manufacturer or seller using the communication interface in many different ways, e.g. by mail, upload to the manufacturer or seller or by using a web interface.

An example for the overall process now follows:

A customer looking for a present wants to buy a present for the target person from the manufacturer or seller, either directly, in a shop or online using a communication interface on/from the communication terminal of the customer. However, the customer does not know for sure which of the products presented by the manufacturer or seller really fit the taste of the target person. In a special case, the customer can also be the target person, e.g. when the customer orders for him-/herself.

The manufacturer or seller in the communication interface presents to the customer the option to buy a package including a sample set of the product/product category he/she wants to give as a present to the target person. The package normally includes products from the same food product category as the product selected by the customer (e.g. the present) which is later selected based on the taste of the target person. The customer is also able, for example, to submit messages such as birthday wishes, that should be transmitted to the target person either with the sample set, with the product itself or both. The communication interface can also be used for this. The customer then buys the package, for example in the shop or online.

The target person now receives the sample set from the manufacturer or seller, e.g. by postal service or express delivery.

The sample set can be accompanied by a manual that explains how the samples have to be tested or tried. E.g. for products such as wine, coffee or tea specific instructions can be provided how the samples have to be prepared before being consumed by the target person.

The target person now consumes/tastes the samples of the sample set and records a liking value for each sample. As explained above, the result of the rating, i.e. the liking values, is submitted to the manufacturer or seller, e.g. online using a communication interface that may differ from the communication interface used by the customer.

The manufacturer or seller will then evaluate the result of the rating, i.e. the liking values, which reflects how much the target person liked each sample. The evaluation can be automatically performed by the computing unit using the liking values and sensory scores to obtain, e.g., a liking score and/or a Normalized Consumer Liking. As explained previously, this evaluation can at least be performed by an application running on the target person's interface.

Based on the Normalized Consumer Liking for each organoleptic property or a number of selected key organoleptic properties that have received the best rating by the target person, the manufacturer or sellers sends a product to the target person. This product, for example, shows the organoleptic properties liked by the target person most. In other words: Based on the NCL, a ranking of the most liked properties is calculated and the manufacturer sends a product to the target person based on this ranking.

This means, that the organoleptic properties, e.g. flavor components that had the most impact on the target person in the samples containing these flavor components, were rated highest and hence produced the highest Normalized Consumer Liking. They are also contained in the product sent to the target person, for example, to a larger degree than other organoleptic properties, e.g. flavor components.

Of course, it is also possible, in response to the liking values submitted to the manufacturer or seller, that either the customer or the target person is presented with an option to choose from a number of products that fit to at least one organoleptic property with the highest Normalized Liking score by using the communication interface, e.g. a website of the manufacturer or seller. The customer or target person can then choose from the presented product and the product will be sent to the target person.

In a further aspect, the customer or target person can also choose to answer a number of questions to the manufacturer or seller, e.g. by using an (online) quiz, to find out which products could be the most suitable for the target person.

Moreover, if more than one product is found to be suitable for the target person, questions might be asked to the target person by the computing system, e.g. by using a communication interface, to more specifically determine a preference of the target person. Based on this determination, a product can then be automatically selected.

If no specific product can be selected, the process can be repeated.

It is also possible to send new samples to the target person. The new samples can then be tailored to determine the target person's preference more clearly. For example, the samples can be tailored to provide (other) organoleptic properties that allow to more clearly distinguish the samples from each other e.g. by increasing the intensity of the organoleptic properties in the samples relative to each other. Also, the samples can only show organoleptic properties previously determined to be most relevant, but in different intensities over the new samples to allow a fine tuning in respect to the organoleptic property most relevant for the target person. In the following, an example is provided on how the suitable products are determined.

The sample set, or sample kit, contains n samples each providing at least one organoleptic property of flavor and/or texture. These organoleptic properties are predefined.

For each organoleptic property or for a specific combination of organoleptic properties one sample is created, e.g. a chocolate is produced with this organoleptic property enhanced. For example an organoleptic property could be "vanilla" for the chocolate and this organoleptic property could be presented in form of a base chocolate with at least an increased vanilla (extract/flavor) content.

The sample set is then profiled using a sensory profiling method, such as for example, a Quantitative Description Analysis QDA. A result from this profiling can be a score of intensity obtained for each organoleptic property. This score is called "sensory score".

Fig. 1 shows an example of some "kit chocolates" (Kit choc. 1 and 2) with their sensory scores (SC) obtained by QDA. For example, as shown in Fig. 1 a sample chocolate 1 can have a number of organoleptic properties (e.g. flavors). In this case, sample 1 has the organoleptic properties "cocoa", "milky", "vanilla" and "sweetness". Each of these organoleptic properties is also contained in the sample 2, but not to an equal extend/intensity.

As can be seen from Fig. 1, the sensory scores for "cocoa" and "milky" of sample 1 are much higher than the sensory scores for "vanilla" and "sweetness". Also, the sensory scores for the organoleptic properties of sample 1 (Kit choc. 1) differ from the organoleptic properties of a sample 2 (Kit choc. 2). For chocolate sample 2, for example, the organoleptic properties "cocoa" and "sweetness" are the most enhanced organoleptic properties. The chocolate samples are validated if the sensory score for the organoleptic property most enhanced in the sample is significantly superior (with 95% confidence level) to the score of another sample for this organoleptic property.

As described above, the target person is presented with a set of samples, e.g. a set of sample chocolates. The target person is then asked to taste and score each sample, e.g. one after the other. In this, the target person can follow a guide that is provided with the sample set. The target person then chooses a liking value (e.g. from 1 to 7; from "excellent" to "dislike very much") for each sample and submits it to the manufacturer or seller.

The manufacturer or seller can for example create or provide a user profile for the target person in which the target person can enter the liking values for each sample. In this way, the target person can access the results of the sampling whenever desired.

It is also possible that the target person is able to send the created profile including the information regarding the outcome of the sampling by email or to link it to social platforms such as Facebook, Google+, etc. where visitors of the target persons profile can access the results of the sampling and for example present products suitable to the taste to the target person. It is also possible, that the visitors are presented with a suitable present and/or a selection of presents respecting the taste of the target person.

For example, the products can be identified by at least one key sensory organoleptic property. The products are therefore all distinguishable by their key sensory organoleptic properties. For example, chocolates and/or assortments can be created to show these key sensory organoleptic properties. For example, the production of the manufacturer can be guided to produce products differentiated according to key organoleptic properties or combinations thereof. Chocolates could be produced adhering to a specific chocolate profile. In Fig. 2 an example for key organoleptic properties of a product "Filled 1" of a product range is shown. In this example, "milky" and "cocoa" would be key organoleptic properties for the product Filled 1.

As described above the definition of the key organoleptic properties is obtained through a sensory profiling for each product using the same profiling method used for the samples. For example, a sensory score from 0 to 10 can be obtained for each organoleptic property of the product. In Fig. 2 for product "filled 1" the sensory scores are 4.69 for "cocoa", 5.26 for "milky", 0.15 for "vanilla" and 3.17 for "sweetness". In this case, "cocoa" and "milky" are selected as key organoleptic properties.

A "max score in the range" is also provided for each organoleptic property. In Fig. 2 these scores are 8.49 for "cocoa", 7.51 for "milky", 4 for "vanilla" and 7.56 for "sweetness".

Additionally, a "percentage of the max" value is calculated for each sensory organoleptic property representing a percentage relative to the maximum score obtained in the product range for this organoleptic property.

This is illustrated in Fig. 2, which shows a "percentage of the max" of 55% for "cocoa", 70% for "milky", 3.7% for "vanilla" and 42% for "sweetness".

Now the ranking of the organoleptic properties, e.g. the key sensory organoleptic properties for the chocolate, according to the contribution of the target person's preference is described.

As a result from the rating of the target person, the liking values (OL) are known to the manufacturer or seller as well as the sensory organoleptic properties of the samples.

Now, in an automated computer-assisted manner, a score of "Liking" ("liking score") is calculated for each sensory organoleptic property by summing up multiplications of the sensory scores and the liking values for an organoleptic property.

For example, the liking score for cocoa for a target person is calculated by

$$\mathrm{Liking_{cocoa}} = SC_{kitchoc1} \times OL_{kitchoc1} + SC_{kitchoc2} \times OL_{kitchoc2} + SC_{kitchoc3} \times OL_{kitchoc3} + SC_{kitchoc4} \times OL_{kitchoc4}$$

With the values taken from Fig. 1 for samples 1 and 2 (Kit choc. 1 and 2) and two other samples with sensory scores 1.12 and 8 for organoleptic property cocoa and respective liking values 5, 2, 6 and 1, the liking score for cocoa is

$$\mathrm{Liking_{cocoa}} = 4.69 \times 5 + 6.57 \times 2 + 1.12 \times 6 + 8 \times 1 = 51.31$$

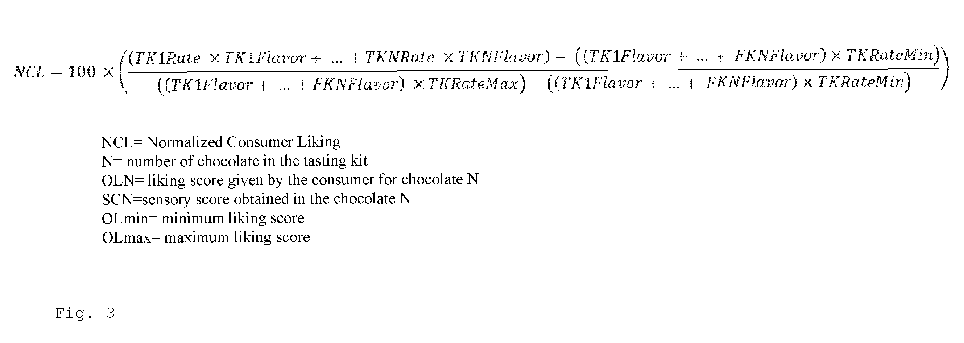

The Normalized Consumer Liking NCL for cocoa is calculated according to the formula of Fig. 3. Where NCL is the Normalized Consumer Liking, N is a number of chocolates in the sample set/tasting kit, $OL_N$ is a liking value given by the consumer for chocolate N, $SC_N$ is sensory score obtained for a organoleptic property in the chocolate N, $OL_{min}$ is a minimum liking value, and $OL_{max}$ is a maximum liking value.

With the formula of Fig. 3, the NCL of cocoa for a target person is for example calculated as:

$$OL_{min\ cocoa} = (4.69 + 6.57 + 1.12 + 8)\ x1 = 20.38$$

$$OL_{max\ cocoa} = (4.69 + 6.57 + 1.12 + 8)\ x7 = 142.66$$

$$NCL_{cocoa} = 100\ x\ (OL_{cocoa} - OL_{min\ cocoa})\ /\ (OL_{max\ cocoa} - OL_{min\ cocoa})$$

$$NCL_{cocoa} = 100\ x\ (51.31 - 20.38)\ /\ (142.66 - 20.38)$$
$$= 25.3\ \%$$

The Normalized Consumer Liking NCL of each organoleptic property is calculated and all NCLs are then ranked. This ranking provides an order of organoleptic properties representing the importance of each organoleptic property to the target person. A single organoleptic property or a number of organoleptic properties can then be selected as "key organoleptic properties".

These key organoleptic properties can then be used to match a specific product or a specific range of products to the target person wherein the determined Normalized Consumer Liking scores and the key organoleptic properties are reflected in the selected products.

The key organoleptic properties can also identify a specific taste profile for the target person. For example, for chocolate the key organoleptic properties can tell, whether the target person belongs to a specific product profile, e.g. a chocolate profile, such as "milky + nutty", "cocoa + fruity", etc. Each profile can then also be linked to products or assortments made of for example chocolates, which again reflect the key organoleptic properties. Each product profile can comprise a number of attributes such as at least one of a specific name, icon, theme, social (networking) group, access to special areas of an online presence of the manufacturer/seller, associations to other persons with the same product profile, sportive events, competitions, etc.).

For example, the evaluation process results in the top to organoleptic properties for the target person being "milky" and "cocoa". The two organoleptic properties can be related to a product profile.. Hence, the target person falls in this profile.

Based on the target person's profile and the type of present that was selected by the customer in the beginning e.g. type, form, number of units, ... the method selects a specific product or presents a range of suitable products to the target person for selection.

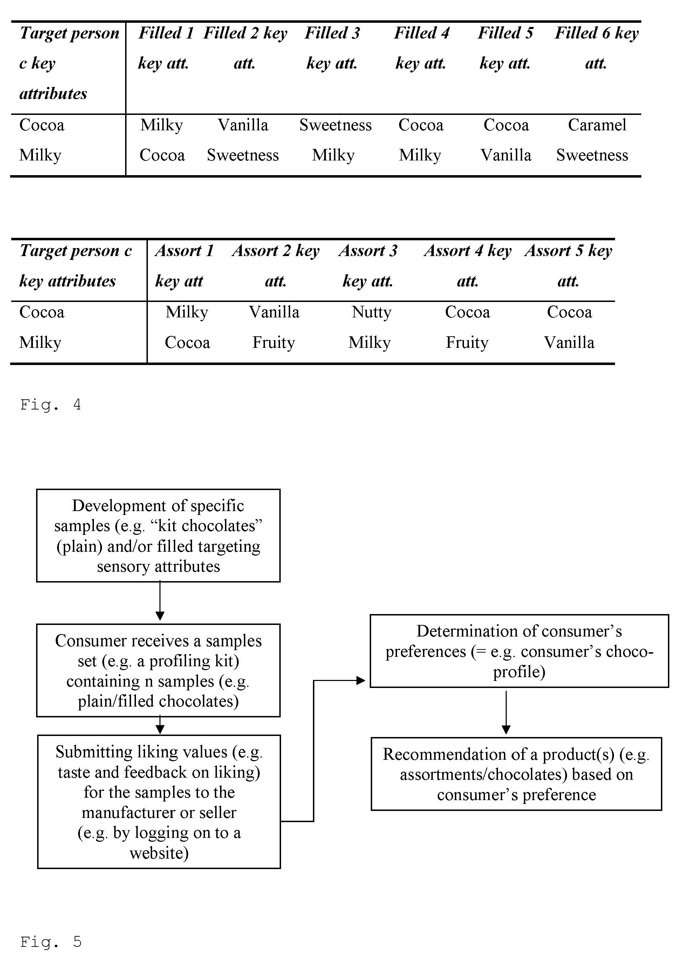

Fig. 4 shows an example for recommendations presented to the target person according to the key organoleptic properties for the products (e.g. 6 filled products and 5 assortments). In this example, the target person, for which the organoleptic property "cocoa" and "milky" are most important, will be presented with a selection of products "filled 1" and/or "filled 4" as well as "assortment 1".

In summary, the present invention allows to identify and quantify the ideal sensory profile and/or organoleptic property for each target person in order to be able to make personalized recommendations based on factual tasting and quantified sensory properties of the products of a range. Fig. 5 gives an overview on the inventive method.

Fig. 6 illustrates the inventive method in another example. A customer transmits 1 to the manufacturer or seller that he wants to give a present to the target person while being unsure what the target person really likes. While the customer can go to a shop, the customer is also able to go to the website or homepage of the manufacturer or seller. The customer may simply just submit a request 2 of sending to the target person any product of the manufacturer or seller, possibly limited by a maximum amount of money the customer wants to spend. The customer may also be able to select a product category or type. The manufacturer or seller then sends 3 a sample (set) to the target person as described above. As also indicated above the target person rates/evaluates 4 the sample(s) either online and/or transmits the results (liking values) to the manufacturer or seller in another way. The manufacturer or seller receives 5 this rating/ evaluation and calculates the liking scores as explained above. The manufacturer or seller then can present a selection of products to the target person based on the rating/evaluation results. The manufacturer or seller then sends a product based on a choice of the target person to the target person. The manufacturer or seller can also send 6 a product directly to the target person after the results are received.

## Claims

1. A method for tailoring food and/or beverage products to consumer requirements, comprising the steps of

 - providing (3) a target person with a set of a plurality of different food product samples of the same food product category, each product sample having at least two predefined organoleptic properties and the food product samples differing from each other with regard to at least one organoleptic property, wherein each organoleptic property is present, preferably in differing strengths, in at least two food product samples,
 - receiving (5) liking values representing a liking for the consumed product samples from the target person, via a first communication interface designed for electronic communication, and
 - computing a target person-specific prioritization ranking as to the organoleptic properties by a computing system, communicating with the first communication interface, preferably via a wireless or wirebound network, and designed for computing the prioritization ranking, the prioritization ranking being compiled by computing, for each of the organoleptic properties, a liking score for the corresponding organoleptic property, the liking score having contributions from liking values of at least two different food product samples consumed by the same target person.

2. The method of claim 1, further comprising the step of sending at least one product to the target person, said product being selected based on the computed prioritization ranking.

3. The method of claim 2, wherein the product is selected from a group of available products, a number of key organoleptic properties being associated to each product, and wherein the product is selected if the key organoleptic properties match the organoleptic properties having the highest ranking.

4. The method of any of the preceding claims, wherein the plurality of different food product samples is sent to the target person in response to a request (2) by a customer using a second interface being designed for the customer.

5. The method of claim 4, wherein the customer in the request identifies (2) a product type and/or product group from which the product to be sent to the target person should be selected.

6. The method of claim 4 or 5, wherein the second interface is a communication interface and wherein the request (2) is received by a manufacturer or seller electronically.

7. The method of any one of the claims 4 to 6, wherein the customer submits via the second interface with the request (2) another parameter of the product to be sent to the target person, wherein the parameter is at least one of weight, price category, number of items, volume, and size, and/or wherein the customer submits additional information, the information being at least one of address information, payment/billing information, messages accompanying the product and/or the sample.

8. The method of any of claims 4 to 7, wherein the sample set provided (3) to the target person comprises samples representing differing expressions of a specific type of food product which has been chosen by the customer.

9. The method of any one of the preceding claims, wherein the organoleptic property or organoleptic property combination of the samples are determined in a sensory profiling process for a sample type.

10. The method of any one of the preceding claims, wherein the at least one organoleptic property is assigned a sensory score (SC) and/or wherein each organoleptic property of the sample is assigned a sensory score (SC).

11. The method of any one of the preceding claims, wherein the step of receiving (5) liking values for the consumed product samples comprises a step wherein the target person rates the samples according to a rating schema provided via the first communication interface.

12. The method of any one of the preceding claims, wherein the step of receiving (5) liking values for the consumed product samples comprises a step wherein the target person assigns an liking value (OL) to at least one sample, preferably to each sample, and transmits it using the first communication interface.

13. The method of claims 9 and 11, wherein based on the liking value (OL) for each sample and the sensory score (SC) for each organoleptic property of each sample the liking score is computed as a normalized consumer liking (NCL), and wherein the organoleptic properties are ranked according to the normalized consumer liking (NCL) in the target person-specific prioritization ranking.

14. The method of any one of the preceding claims, wherein the samples are specifically produced to show at least one organoleptic property more significantly than another organoleptic property.

15. The method of claim 1, wherein the target person-specific prioritization rankings computed for a plurality of target persons is used to specifically design or develop products matching consumer preferences.

16. The method of claim 6, wherein the first and/or the second communication interface is a website or an application executed on a stationary or mobile communication terminal.

17. A computer program product, executing a method according to any of the preceding claims when run on distributed or non-distributed computing resources.

18. A system, comprising:

   - a set of a plurality of different food product samples of the same food product category, each product sample having at least two predefined organoleptic properties and the food product samples differing from each other with regard to at least one organoleptic property,
   wherein each organoleptic property is present, preferably in differing strengths, in at least two food product samples,
   - a first communication interface being designed to electronically receive (5) liking values representing a liking as to the consumed product samples from a target person,
   - a computing system, functionally connected to the first communication interface preferably via a network and designed for computing a target person-specific prioritization ranking as to the organoleptic properties, the prioritization ranking being compiled by computing, for each of the organoleptic properties, a liking score for the corresponding organoleptic property, the liking score having contributions from liking values of at least two different food product samples consumed by the same target person.

19. The system of claim 18, configured to execute any one of the method steps of any one claims 1 to 17.

| Score of intensity (/10) | Kit choc.1 | Kit choc. 2 | ... ... ... |
|---|---|---|---|
| Cocoa | 4.69 | 6.57 | |
| Milky | 5.26 | 2.21 | |
| Vanilla | 0.15 | 1.7 | |
| Sweetness | 3.17 | 3.15 | |
| ... ... ... | | | |

Fig. 1

| Score of intensity (/10) | Filled 1 | Max score in the range | Percentage of the max |
|---|---|---|---|
| Cocoa | 4.69 | 8.49 | 55% |
| Milky | 5.26 | 7.51 | 70% |
| Vanilla | 0.15 | 4 | 3.7% |
| Sweetness | 3.17 | 7.56 | 42% |
| ... ... ... | | | |

Fig. 2

$$NCL = 100 \times \left( \frac{(TK1Rate \times TK1Flavor + ... + TKNRate \times TKNFlavor) - ((TK1Flavor + ... + FKNFlavor) \times TKRateMin)}{((TK1Flavor + ... + FKNFlavor) \times TKRateMax) \quad ((TK1Flavor + ... + FKNFlavor) \times TKRateMin)} \right)$$

NCL= Normalized Consumer Liking
N= number of chocolate in the tasting kit
OLN= liking score given by the consumer for chocolate N
SCN=sensory score obtained in the chocolate N
OLmin= minimum liking score
OLmax= maximum liking score

Fig. 3

EP 2 551 669 A1

| Target person c key attributes | Filled 1 key att. | Filled 2 key att. | Filled 3 key att. | Filled 4 key att. | Filled 5 key att. | Filled 6 key att. |
|---|---|---|---|---|---|---|
| Cocoa Milky | Milky Cocoa | Vanilla Sweetness | Sweetness Milky | Cocoa Milky | Cocoa Vanilla | Caramel Sweetness |

| Target person c key attributes | Assort 1 key att | Assort 2 key att. | Assort 3 key att. | Assort 4 key att. | Assort 5 key att. |
|---|---|---|---|---|---|
| Cocoa Milky | Milky Cocoa | Vanilla Fruity | Nutty Milky | Cocoa Fruity | Cocoa Vanilla |

Fig. 4

Development of specific samples (e.g. "kit chocolates" (plain) and/or filled targeting sensory attributes

↓

Consumer receives a samples set (e.g. a profiling kit) containing n samples (e.g. plain/filled chocolates)

↓

Submitting liking values (e.g. taste and feedback on liking) for the samples to the manufacturer or seller (e.g. by logging on to a website)

→

Determination of consumer's preferences (= e.g. consumer's choco-profile)

↓

Recommendation of a product(s) (e.g. assortments/chocolates) based on consumer's preference

Fig. 5

Fig. 6

# EP 2 551 669 A1

Europäisches
Patentamt

European
Patent Office

Office européen
des brevets

## EUROPEAN SEARCH REPORT

Application Number

EP 11 17 6032

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2010/332352 A1 (BUCHER TIMOTHY [US]) 30 December 2010 (2010-12-30) * claims 1,2 * | 1-19 | INV. G01N33/00 G01N33/02 H04N21/40 |
| A | DATABASE WPI Week 200270 Thomson Scientific, London, GB; AN 2002-649912 XP002665649, & JP 2002 230258 A (SHIMIZU Y) 16 August 2002 (2002-08-16) * abstract * | 1-19 | |

TECHNICAL FIELDS
SEARCHED (IPC)

G01N
H04N
A23L

The present search report has been drawn up for all claims

| Place of search | Date of completion of the search | Examiner |
|---|---|---|
| Munich | 13 December 2011 | Groh, Björn |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

17

**ANNEX TO THE EUROPEAN SEARCH REPORT
ON EUROPEAN PATENT APPLICATION NO.**                    EP 11 17 6032

This annex lists the patent family members relating to the patent documents cited in the above-mentioned European search report.
The members are as contained in the European Patent Office EDP file on
The European Patent Office is in no way liable for these particulars which are merely given for the purpose of information.

13-12-2011

| Patent document cited in search report | Publication date | Patent family member(s) | Publication date |
|---|---|---|---|
| US 2010332352 A1 | 30-12-2010 | US 2010332352 A1<br>WO 2010151801 A2 | 30-12-2010<br>29-12-2010 |
| JP 2002230258 A | 16-08-2002 | NONE | |

EPO FORM P0459

For more details about this annex : see Official Journal of the European Patent Office, No. 12/82